# EUROPEAN PATENT APPLICATION

(11) **EP 2 362 314 A1**
(43) Date of publication of application: **31.08.2011**
(21) Application number: 10305164.5
(22) Date of filing: 18.02.2010
(51) Int. Cl.: G06F 11/28, G06F 21/00

(54) **Method and apparatus for verifying the integrity of software code during execution and apparatus for generating such software code**

(71) Applicant: Thomson Licensing, 92130 Issy-les-Moulineaux (FR)
(72) Inventor: Monsifrot, Antoine, 92443, Issy-Les-Moulineaux (FR); Salmon-Legagneur, Charles, 92443, Issy-Les-Moulineaux (FR)
(74) Representative: Ruellan-Lemonnier, Brigitte

(57) **Abstract**

Self-modifying software code comprising a number of modules (F1, F2) that each may be modified to be in a plurality of states (S1, S1) during execution. In order to verify the integrity of such code, the different states of the code are calculated. For each state a checksum, e.g. a hash value, is generated for at least part of the code. During execution the state of the code is changed (320), modifying (330) a module (F1, F2), and an integrity check is performed (340) using the checksum for the state of the code. The checksum may be stored in a look-up table (434) or it may be embedded in the integrity verification function. A state variable (S) indicating the state of the modules may be used to look-up the checksum in the table (434). Possible states of a module is encrypted and decrypted. Also provided is an apparatus (420) for generating protected software code (430).

## Description

### TECHNICAL FIELD

The present invention relates generally to software, and in particular to ensuring the integrity of software.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

It is relatively common for software providers to protect the integrity of a computer program with the goal of making sure that the program performs as intended. However, hackers commonly try to hack the program to perform in different ways. An example is that hackers sometimes wish to modify the code to get around access control features of the program in order to be able to use it without the necessary access rights.

A prior art method of ensuring the integrity of a program is to compute a signature (a.k.a. checksum) over at least some parts of the code. A signature may for example be a hash value, calculated over the parts of the code, and then signed using a secret key. The skilled person will appreciate that numerous other possibilities exist. During program execution, the signature of the code is calculated at least once. To increase the security level, the functions that calculate the signatures are nested, so that the integrity of each function is verified by at least one other function. Thus, if just one function remains intact, it will detect tampering with at least one other function. Further details and explanations may for example be found in US 2003/188231 and EP 1942431, and US 2002/138748 teaches how to determine integrity for relocatable code.

As is to expect, a way to overcome this protection has been found, not by a hacker but academia: Glen Wurster et al., "A Generic Attack on Checksumming Based on Software Tamper Resistance"; in SP '05: Proceedings of the 2005 IEEE Symposium on Security and Privace; pages 127-138, Washington DC, USA, 2005; IEEE Computer Society. Their method uses two copies of the code: one that is an unmodified version and another that has been modified. The modified copy of the code is executed and whenever a checksum is required, this is calculated using the unmodified copy of the code. The method thus makes it possible to modify the code while it at the same time is possible to provide correct checksums, i.e. checksums corresponding to the unmodified code, although it should be acknowledged that the attack cannot be performed on all kinds of processors.

A countermeasure proposed by Wurster et al. is to change the access rights for the page that contains the code. If the right to read the code is removed also for the code itself, then this provokes an interruption (when the code tries to read itself) that may be hooked to provide an unmodified code.

Another problem is that prior art checksums are not adapted to self-modifying code, since a specific checksum is valid only for one version of the code, i.e. before or after the modification.

It can therefore be appreciated that there is a need for an improved solution for ensuring the integrity of software code, in particular for code that is self-modifying. This invention provides such a solution.

### SUMMARY OF INVENTION

In a first aspect, the invention is directed to a method of verifying the integrity of self-modifying software code during execution thereof. The software code comprises at least one module capable of being in at least two possible states during execution. A processor executing the software code transforms the module from a first state to a second state and verifies the integrity of at least the module.

In a first preferred embodiment, the integrity of the module is checked by comparing the module with a checksum for at least the module in the second state. It is advantageous that the checksum is a hash value. It is also advantageous for the checksum to be embedded in a function verifying the integrity of the module or included in a look-up table; a function verifying the integrity of the module advantageously uses a state variable indicating the state of each module to access the checksum in the look-up table.

In a second preferred embodiment, the two possible states of the module correspond to the module in encrypted form and the module in unencrypted form.

In a second aspect, the invention is directed to an apparatus for verifying the integrity of self-modifying software code during execution. The software code comprises at least one module, each module being capable of being in at least two possible states during execution. The apparatus comprises a processor adapted to execute the software code, transform the module from a first state to a second state, and verify the integrity of at least the module.

In a third aspect, the invention is directed to an apparatus for generating an integrity-protected self-modifying binary, the binary comprising at least one module, each module being capable of being in at least two possible states during execution. The apparatus comprises a processor adapted to receive a binary of a software code; calculate a number of states of the binary, each state corresponding to a different combination of states of the at least one module; generate a checksum for at least part of the binary in each of its states; and generate the integrity-protected binary by insertion at least one checksum verification function and the generated checksums into the binary, each checksum function being adapted to verify the integrity of at least part of the integrity-protected binary.

In a first preferred embodiment, the processor is further adapted to insert a plurality of checksum verification functions in a nested manner so that, during execution, the integrity of each checksum verification function is verified by at least one other checksum verification function.

In a fourth aspect, the invention is directed to a computer program product having stored thereon an integrity-protected binary generated by the apparatus of the third aspect.

### BRIEF DESCRIPTION OF DRAWINGS

Preferred features of the present invention will now be described, by way of non-limiting example, with reference to the accompanying drawings, in which
Figure 1 illustrates an exemplary computing device on which the invention may be implemented;
Figure 2 is a state diagram that illustrates a preferred embodiment of the present invention;
Figure 3 illustrates a method for integrity verification according to a preferred embodiment of the present invention;
Figure 4 illustrates protection of a binary; and
Figure 5 illustrates an exemplary state transition diagram.

### DESCRIPTION OF EMBODIMENTS

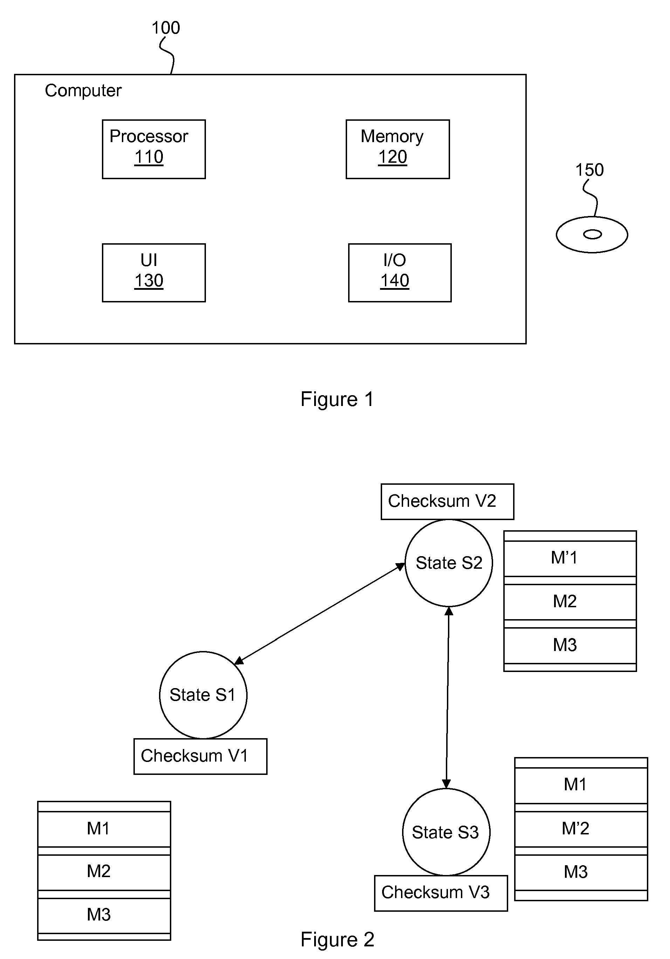

Figure 1 illustrates an exemplary computing device ("computer") 100 on which the invention may be implemented. The computer 100 can be any kind of suitable computer or device capable of performing calculations, such as a standard Personal Computer (PC). The computer 100 comprises at least one processor 110, RAM memory 120, a user interface 130 for interacting with a user, and a second interface 140 for reading a software program from a digital data support 150. The skilled person will appreciate that the illustrated computer is very simplified for reasons of clarity and that a real computer in addition would comprise features such as network connections and persistent storage devices.

A main inventive idea of the present invention is the use of a finite state machine, during execution of the program, where each state corresponds to a state of the protected program code. When passing from one state to another, at least one module of the code is dynamically modified. Finite state machines as such are well known in the art and will therefore not be described in detail. Non-limitative examples of modules are: subsections of code, chunks of code, and functions. To protect against tampering, it is possible to compute a checksum for each state, which can allow prevention against tampering with the code.

Figure 2 is a state diagram that illustrates a preferred embodiment of the present invention. For the sake of clarity of illustration, the exemplary state diagram comprises only three states (S1, S2, S3), each associated with a checksum, and the code only comprises three modules (M1, M2, M3); the skilled person will realise that the invention applies equally well to more (and to fewer) states and modules, and that different state transitions are possible.

In the example, the initial state is S1. In this state, all the modules of the code are in their initial state and the state is associated with a first checksum, checksum V1, which enables integrity verification of at least one of the modules.

When execution causes a shift from state S1 to state S2, the first module M1 is modified, generating modified module M'1. It is preferred to verify the checksum (using checksum V2) at this time, but the verification may also be performed at a later stage, something that can apply to each state transition.

Similarly, when execution causes a change from state S2 to state S3, the second module M2 is modified, generating modified module M'2, and modified module M'1 is returned back to its unmodified state M1, so that the code comprises the three modules M1, M'2 and M3. As previously explained, it is preferred to verify the checksum (using V3) at this point.

When moving from state S3 to state S2 and from state S2 to state S1, the modifications are performed in the reverse direction; e.g. when going from S2 to S1, modified module M'1 is returned to its unmodified form M1. Also in these cases is it preferred to verify the checksum (using the relevant checksum) after the transition.

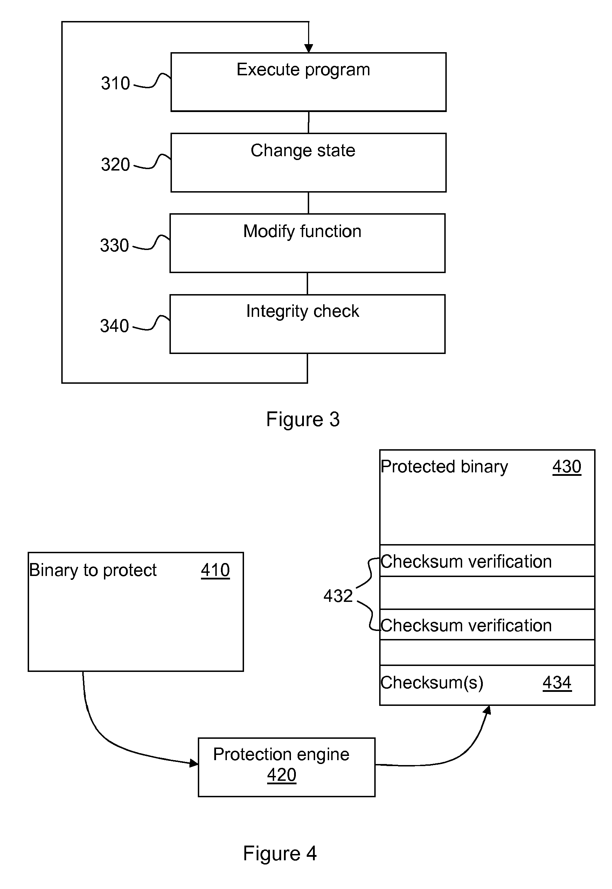

Figure 3 illustrates a method for integrity verification according to a preferred embodiment of the present invention. The method can start with normal program execution, step 310. At some point, it is decided to change state, step 320. At least one module is modified, step 330, and the integrity is checked, step 340. After this, normal program execution resumes in step 310.

A module may for example be modified by deciphering of the module (in which case a decryption key is necessary) or by altering some bytes of the module, such as by permutation. In the first case, the code is enciphered to return it to its initial state (necessitating an encryption key that, in a symmetric encryption algorithm, may be the same as the decryption key); in the second case, the bytes are altered back to the initial configuration, such as by backwards permutation.

Figure 4 illustrates protection of a binary 410. A protection engine 420 is in charge of enumerating the possible states and their respective checksum values. These checksum values are inserted, together with some references allowing identification, into the protected binary 430. The protection engine 420 may be any kind of suitable computing device, e.g. a personal PC; it preferably comprises a processor, memory, and so on (not shown).

In order to protect the binary 410, the protection engine 420 analyses the binary 410 in order to calculate the possible states; to this end, it advantageously uses call graph analysis and state analysis. Once the states have been generated, the protection engine 420 computes the checksums for the states.

The protection engine then generates a protected binary 430 comprising at least one checksum invocation point 432 and a table (which may comprise a single value) of checksums 434, one for each state in which a checksum may be verified. The checksums are preferably associated with some kind of identifier allowing easy access, e.g. indications like State 1, State 2... or indications along the lines of 'Module 1 encrypted, Module 2 decrypted, Module 3 encrypted'. The checksum table 434 is preferably in the form of hash values for at least part of the protected binary, but other checksums may also be envisaged, such as the number of a certain character in a certain range of the binary. The checksums may be protected, for example by encryption, but it is preferred, as mentioned hereinbefore, to nest the checksum verification functions so that the integrity of each function is verified by at least one other function.

It should be noticed that it is also possible to do without the checksum table 434 provided that a checksum of a state may be determined from the checksum of the previous state in a deterministic manner. The checksums may also be obfuscated in the protected binary or even stored in a separate file.

Consider then the following non-limitative example. To facilitate the description and the understanding thereof, the example is limited to the case where a single code area (called 'checksum range') is protected by checksum verifications, which preferably occur at several invocation points during program execution. The skilled person will appreciate that the invention is easily extensible to the case of multiple checksum ranges. The example is further limited to the specific case where a module corresponds to a function that may be in two different states, encrypted and decrypted.

There are thus inherent state transitions in the code and each state is preferably verified in at least one checksum invocation point in the protected binary.

In the example, as each function may be in one of two possible states (encrypted and decrypted) it is possible to represent the state as a state bit Si in state variable S, preferably a bit stream. The state variable S can express values that are not possible depending on the function call graph of the application; as such, it is likely that only a subset of the possible values of the state variable S are valid for the application. Each value of the state variable S corresponds to a checksum value computed by the protection engine and these checksum values are embedded (advantageously as hash values) in the protected binary. A hashed checksum may then be looked up using the state variable S as an identifier.

Whenever a function is encrypted or decrypted - i.e. when the state changes - the state variable S is updated by flipping the appropriate state bit Si.

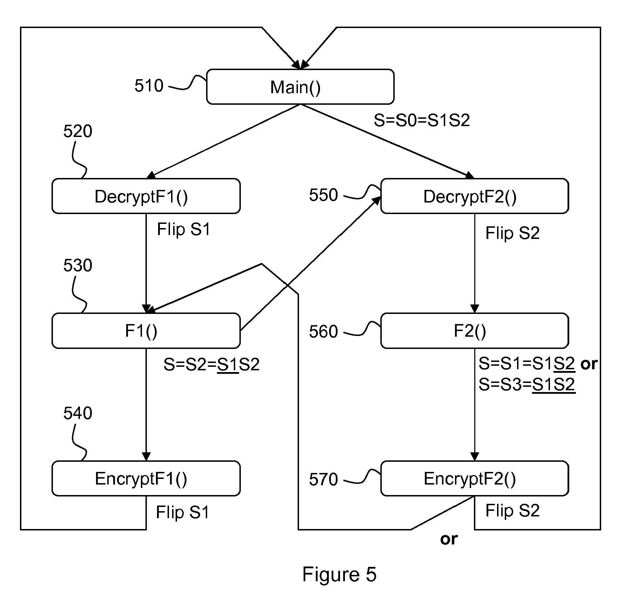

Figure 5 illustrates an exemplary state transition diagram with two functions F1, F2, each associated with a state bit S1, S2. Each function may be encrypted (represented by S1, S2) and decrypted (represented by S1, S2), resulting in four different states:
- S0: F1 and F2 encrypted - (S1 S2)
- S1: F1 encrypted, F2 decrypted - (S1 S2)
- S2: F1 decrypted, F2 encrypted - (S1 S2)
- S3: F1 and F2 decrypted - (S1 S2)

At first, the program executes the main function 510; the state S is S0=S1S2; the main function may call functions F1 and F2. If function F1 is called, the encrypted F1 is decrypted 520 and S1 is flipped, after which execution of F1 530 commences; the state S is S2=S1S2. Similarly, if function F2 is called, the encrypted F2 is decrypted 550 and S2 is flipped, after which execution of F2 560 commences; the state S is S1=S1S2.

There are two possibilities in function F1 530: execution of F1 ends, and F1 calls F2. In the first case, F1 is encrypted 540, S1 is flipped and execution returns to the main function 510; the state returning to S0=S1S2.

In the second case, F2 is decrypted 550, state bit S2 is flipped, execution of F2 560 commences. However, in contrast to when the main function 510 calls F2 directly, F1 is also decrypted, which means that the state is S3=S1S2. Hence, during execution of F2, the state may be either S1 or S3.

Thus, when execution of F2 ends, F2 is encrypted 570, the state bit S2 is flipped and execution returns to the calling function. If the calling function was main function, the main function 510 takes over execution; the state is then S0=S1S2. On the other hand, if the calling function was F1, then execution of F1 530 resumes; the state is then S2=S1S2.

In Figure 5, the checksum invocation points were omitted for ease of understanding, but it is to be understood that each function - main, F1, F2 - preferably comprises at least one checksum invocation point (possibly as part of the encryption/decryption functions) that verifies the checksums associated with the states.

The simplest implementation of a checksum invocation point is for the program to read the current state S, find the corresponding checksum value in the checksum table, and generate a checksum to be verified against the stored checksum value. If the verification fails, execution is preferably stopped.

The skilled person will appreciate that an attacker may attempt to tamper with the checksum values, which is why it is preferable to protect the checksum table as well as the invocation functions with another checksum, so that these may be verified.

It is possible to raise the level of security by 'inlining' the checksum value in the invocation point code, whenever this is possible. In this case, the protection engine advantageously analyzes the call graph to distinguish between three cases.
1. The state is unique when a protected function is entered - i.e. a single execution path leads to the function. In this case, the checksum value is unique and the invocation point code may comprise code that embeds the checksum value (preferably in an obfuscated way). For example: 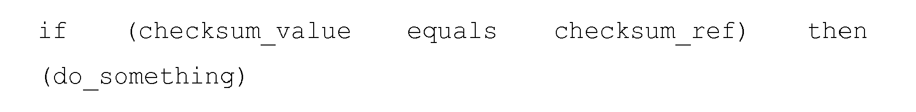
2. There are a small number (e.g. less than 5) of possible states when a protected function is entered. In this case too is it possible to embed the checksum values in the invocation point code. For example: 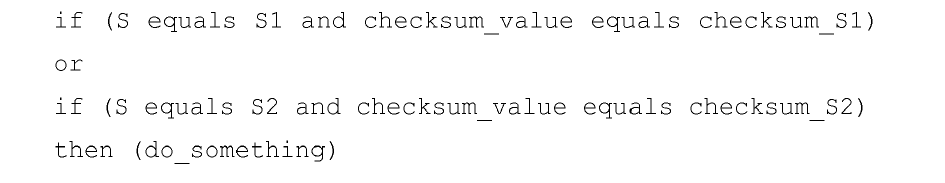
3. If there are many possible states, then the checksum table is the preferred solution. For example:

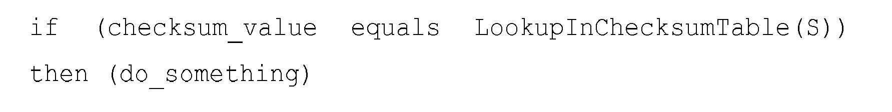

In the description, the modules have been described as having two possible states (e.g. encrypted and decrypted); the skilled person will appreciate that it is possible for a module to have a plurality (in particular more than two) of states.

It will be appreciated that the present invention can provide a way of verifying the integrity of multiple state software code that can overcome the attack described hereinbefore.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of verifying the integrity of self-modifying software code during execution thereof, the software code comprising at least one module (F1, F2) being capable of being in at least two possible states (S1, S1) during execution, the method being performed by a processor (110) executing the software code which causes the processor to perform the steps of:
- transforming (320, 330) the module (F1, F2) from a first state (S1) to a second state (S1); and
- verifying (340) the integrity of at least the module (F1, F2).

2. The method of claim 1, wherein the integrity of the module (F1, F2) is checked by comparing the module (F1, F2) with a checksum for at least the module (F1, F2) in the second state (S1).

3. The method of claim 2, wherein the checksum is a hash value.

4. The method of claim 2, wherein the checksum is embedded in a function verifying the integrity of the module.

5. The method of claim 2, wherein the checksum is included in a look-up table.

6. The method of claim 5, wherein a function verifying the integrity of the module uses a state variable (S) indicating the state of each module (F1, F2) to access the checksum in the look-up table.

7. The method of claim 1, wherein the two possible states of the module correspond to the module in encrypted form and the module in unencrypted form.

8. An apparatus (100) for verifying the integrity of self-modifying software code during execution thereof, the software code comprising at least one module (F1, F2), each module (F1, F2) being capable of being in at least two possible states (S1, S1) during execution, the apparatus (100) comprising a processor (110) adapted to execute the software code and thereby;
- transform the module (F1, F2) from a first state (S1) to a second state (S1); and
- verify the integrity of at least the module (F1, F2).

9. An apparatus (420) for generating an integrity-protected self-modifying binary (430), the binary comprising at least one module (F1, F2), each module (F1, F2) being capable of being in at least two possible states (S1, S1 ) during execution, the apparatus (420) comprising a processor adapted to:
- receive a binary (410);
- calculate a number of states of the binary (410), each state corresponding to a different combination of states of the at least one module (F1,F2);
- generate a checksum for at least part of the binary in each of its states; and
- generate the integrity-protected binary (430) by insertion at least one checksum verification function and the generated checksums into the binary (410), each checksum function being adapted to verify the integrity of at least part of the integrity-protected binary (430).

10. The apparatus of claim 9, wherein the processor is further adapted to insert a plurality of checksum verification functions in a nested manner so that, during execution, the integrity of each checksum verification function is verified by at least one other checksum verification function.

11. A computer program product (150) having stored thereon a self-modifying integrity-protected binary (430) generated by the apparatus of claim 9.
